# EUROPÄISCHE PATENTSCHRIFT

(11) **EP 2 531 379 B1**
(45) Veröffentlichungstag und Bekanntmachung des Hinweises auf die Patenterteilung: **19.08.2015**
(21) Anmeldenummer: 11701947.1
(22) Anmeldetag: 26.01.2011
(51) Int. Cl.: B60R 13/02, F16B 21/06, F16B 21/08

(54) **BAUGRUPPE ZUR BEFESTIGUNG EINES BAUTEILS EINES FAHRZEUGS**
UNIT FOR FASTENING A COMPONENT OF A VEHICLE
MODULE POUR FIXER UN ÉLÉMENT D'UN VÉHICULE

(30) Priorität: 02.02.2010 DE 102010006571
(43) Veröffentlichungstag der Anmeldung: 12.12.2012
(73) Patentinhaber: TRW Automotive Electronics & Components GmbH, 78315 Radolfzell (DE)
(72) Erfinder: DEMERATH, Michael, 66909 Hüffler (DE); LEIDNER, Vitali, 67677 Enkenbach-Alsenborn (DE)
(74) Vertreter: Prinz & Partner mbB
(86) Internationale Anmeldenummer: PCT/EP2011/000342
(87) Internationale Veröffentlichungsnummer: WO 2011/095297

(56) Entgegenhaltungen:
- DE-A1-102009 007 065
- JP-A- 2000 304 020
- JP-U- 61 118 086

## Beschreibung

Die Erfindung betrifft eine Baugruppe zur Befestigung eines Bauteils eines Fahrzeugs, insbesondere zur Befestigung eines Verkleidungsteils an einem Träger, mit einem ersten und einem zweiten Halteteil.

Zur Befestigung von Anbauteilen in einem Fahrzeug, beispielsweise zur Befestigung von Verkleidungsteilen an einem Träger oder Karosserieteil, werden Befestigungsclips verwendet, die aus zwei Halteteilen bestehen. Ein erstes Halteteil wird am Träger befestigt, das zweite am Verkleidungsteil. Die Halteteile werden anschließend, beispielsweise mit einer Rastverbindung, miteinander verbunden, so dass das Verkleidungsteil sicher am Träger befestigt ist. An diese Halteteile und die zwischen ihnen hergestellte Rastverbindung werden hohe Anforderungen gestellt: Zum einen soll eine möglichst feste Verbindung zwischen Verkleidungsteil und Träger hergestellt werden, so dass ein Lösen, beispielsweise im Crashfall, ausgeschlossen ist. Andererseits ist es erwünscht, dass die Halteteile beispielsweise zum Austausch des Verkleidungsteils einfach voneinander getrennt werden können, um eine einfache und schnelle Demontage des Verkleidungsteils zu ermöglichen.

Aus der DE 10 2009 007 065 A1 und der JP 6-118086 U sind des Weiteren Befestigungsbaugruppen bekannt, die einen einstückig mit dem Halteteil ausgeführten Riegel aufweisen, der in einer Verriegelungsposition die Rastelemente fixieren kann.

Aufgabe der Erfindung ist es, eine alternative Baugruppe zur Befestigung eines Bauteils eines Kraftfahrzeugs bereitzustellen, die hohe Abzugskräfte aufnehmen kann und dennoch auf einfache Weise und ohne großen Kraftaufwand montiert und demontiert werden kann.

Erfindungsgemäß ist dafür eine Baugruppe zur Befestigung eines Bauteils eines Kraftfahrzeugs, insbesondere zur Befestigung eines Verkleidungsteils an einem Träger, vorgesehen, mit einem ersten und einem zweiten Halteteil, wobei das erste Halteteil mindestens ein Widerlager aufweist und das zweite Halteteil mindestens einen Rasthäken. An der Baugruppe ist ein Riegel vorgesehen, der zwischen einer Freigabeposition, in welcher der Rasthaken hinter das Widerlager gelangen bzw. von diesem gelöst werden kann, und einer Verriegelungsposition bewegbar ist, in welcher der Rasthaken hinter dem Widerlager verriegelt ist. Der Riegel gelangt automatisch von der Freigabe- in die Verriegelungsposition. Der Riegel ist erfindungsgemäß ein vom ersten Halteteil separates Bauteil. Die Erfindung beruht auf dem Grundgedanken, mit dem Riegel ein zusätzliches Element vorzusehen, das die Rastverbindung zwischen den beiden Halteteilen sichert, aber weder einen zusätzlichen Aufwand bei der Montage darstellt noch eine Demontage verhindert. In der Freigabeposition des Riegels kann sich der Rasthaken ohne zusätzlichen Widerstand vom Widerlager lösen bzw. hinter das Widerlager gelangen, so dass in dieser Position des Riegels eine einfache Montage bzw. Demontage des zweiten Halteteils möglich ist. Ist der Rasthaken hinter dem Widerlager eingeschnappt, gelangt der Riegel automatisch von der Freigabe- in die Verriegelungsposition, wodurch nach der Montage eine selbständige Arretierung des Rasthakens am Widerlager erfolgt. Somit kann der Rasthaken nicht vom Widerlager gelöst werden, so dass sehr hohe Haltekräfte zwischen dem ersten und dem zweiten Halteteil übertragen werden können. Der Riegel kann nach der Montage wieder in die Freigabeposition bewegt werden, so dass zur Demontage der Rasthaken freigegeben werden kann.

Gemäß einer ersten Ausführungsform ist vorgesehen, dass der Riegel zumindest teilweise aus einem Material gefertigt ist, das durch Wärme- oder Stromzufuhr zwischen Freigabeposition und Verriegelungsposition verformt werden kann. Sogenannte Smart-Materials können unter Einfluss von Strom oder Wärmeihre Form reversibel ändern. Nach Beendigung der Strom- oder Wärmezufuhr nimmt das Material seine ursprüngliche Form wieder ein. Der Riegel kann beispielsweise in der Verriegelungsposition vorgeformt sein und durch die Strom- oder Wärmezufuhr in die Freigabeposition bewegt werden. Die Baugruppe kann auch an unzugänglichen Stellen verbaut werden, da kein direkter Zugang mit einem Werkzeug erforderlich ist, um den Riegel von der Verriegelungsposition in die Freigabeposition zu bewegen. Zudem ist es denkbar, durch eine gemeinsame Strom- oder Wärmezufuhr mehrere Baugruppen gleichzeitig zu entriegeln, so dass eine einfache Demontage beispielsweise von größeren Verkleidungsteilen möglich ist.

Der Rasthaken könnte beispielsweise starr ausgeführt und schwenkbar am zweiten Halteteil befestigt sein. Vorzugsweise ist der Rasthaken mindestens teilweise elastisch verformbar ausgebildet, so dass er nach der Montage selbstständig in eine Position hinter dem Widerlager einfedert bzw. einschnappt.

In einer bevorzugten Ausführungsform weist das zweite Halteteil zwei Rasthaken auf, und der Riegel ist in der Verriegelungsposition zwischen den Rasthaken angeordnet. Die Rasthaken sind insbesondere einander gegenüberliegend angeordnet, so dass diese zum Lösen aufeinander zu geschwenkt bzw. aufeinander zu bewegt werden müssen. Da der Riegel in der Verriegelungsposition zwischen den Rasthaken liegt, ist diese Bewegung ausgeschlossen, so dass eine einfache Fixierung der Rasthaken möglich ist. Der Riegel benötigt keine zusätzliche Abstützung, um den Rasthaken am Widerlager zu fixieren, da die von den Rasthaken auf ihn ausgeübten Kräfte ihn lediglich auf Druck belasten; die Wirkrichtung der Kräfte ist senkrecht zur möglichen Bewegungsrichtung des Riegels. Es ist auch denkbar, dass mehr als zwei Rasthaken radial verteilt am zweiten Halteteil vorgesehen sind. Der Riegel kann in diesem Fall in der Verriegelungsposition zwischen den Rasthaken angeordnet sein, so dass ein Zurückfedern aller Rasthaken mit einem einzigen Riegel sicher ausgeschlossen ist.

Während der Montage des zweiten Halteteils am ersten Halteteil ist es erforderlich, dass sich der Riegel in der Freigabeposition befindet, damit der Rasthaken hinter das Widerlager gelangen kann. Dies kann beispielsweise dadurch erfolgen, dass der Rasthaken in einer Zwischenmontageposition, in welcher der Rasthaken teilweise in das Widerlager des ersten Halteteils eingeführt ist, den Riegel in die Freigabeposition drängt. Der Riegel wird also automatisch bei der Montage des zweiten Halteteils am ersten Halteteil in die Freigabeposition gedrängt und gelangt, sobald der Rasthaken hinter dem Widerlager einrastet, automatisch wieder in die Verriegelungsposition, in welcher der Rasthaken fixiert ist. Es sind somit keine weiteren Arbeitsschritte während der Montage der Baugruppe notwendig, so dass eine schnelle und einfache Montage möglich ist.

Der Riegel ist dazu zumindest teilweise aus einem elastisch verformbaren Material hergestellt, so dass er leicht vom Rasthaken verdrängt werden kann bzw. nach dem Einrasten des Rasthakens selbständig in die Verriegelungsposition zurückkehren kann.

Es ist auch denkbar, dass der Riegel ein am ersten Halteteil vorgesehenes, gegen die Einschubrichtung des zweiten Halteteils axial vorstehendes Federelement aufweist, das in der Freigabeposition hin zur Verriegelungsposition vorgespannt ist. Das Federelement wird beim Einschieben des Rasthakens vorgespannt und durch das Einrasten des Rasthakens hinter dem Widerlager freigegeben, so dass es in die Verriegelungsposition zurückfedern kann.

Das Federelement kann beispielsweise durch eine Blattfeder gebildet sein.

Um eine einfache Demontage zu ermöglichen, ist es aber auch denkbar, dass das Widerlager des ersten Halteteils eine Aussparung definiert, die zumindest eine radiale Öffnung aufweist. Der Rasthaken kann durch diese Aussparung radial (bezogen auf die Einschubrichtung, die als "axial" angenommen wird) aus dem Widerlager herausgeschoben werden, wodurch eine einfache Demontage des zweiten Halteelements ohne zusätzliche Hilfsmittel möglich ist.

Um ein Herausrutschen der Rasthaken aus der Aussparung des Widerlagers zu verhindern, sind vorzugsweise Anschläge vorgesehen, an denen das zweite Halteteil in der Endmontageposition anliegt.

Die Demontagekräfte des Rasthakens aus dem Widerlager sind abhängig vom Winkel, den eine Rastfläche des Rasthakens, die am Widerlager anliegt, zur Einschubrichtung aufweist. Ist der Winkel kleiner, sind die Abzugskräfte geringer, da der Rasthaken leichter aus dem Widerlager gleiten kann. Die Rastfläche weist deshalb einen Winkel zur Einschubrichtung von 20° bis 120° auf, vorzugsweise von 90°. Ist der Winkel größer als 90°, erfolgt die Demontage des Rasthakens vorzugsweise durch seitliches Herausschieben durch die Aussparung, da ein Herausgleiten des Rasthakens aus dem Widerlager ab diesem Winkel nicht mehr möglich ist.

Des Weiteren ist erfindungsgemäß ein Verfahren zur Montage einer Baugruppe nach einem der vorhergehenden Ansprüche vorgesehen, das folgende Schritte aufweist:
- Durch Einschieben des Rasthakens in das Widerlager des ersten Halteteils bis in eine Zwischenmontageposition wird der Riegel in eine Freigabeposition bewegt,
- der Rasthaken wird weiter bis in eine Endmontageposition eingeschoben, in der der Rasthaken am Widerlager verrastet,
- der Riegel bewegt sich selbstständig in die Verriegelungsposition.

Da der Riegel nach dem vollständigen Einschieben des Rasthakens in das Widerlager selbständig in die Verriegelungsposition gelangt, sind während der Montage der Baugruppe keine zusätzlichen Arbeitsschritte notwendig.

Erfindungsgemäß ist des Weiteren ein Verfahren zur Demontage der erfindungsgemäßen Baugruppe vorgesehen, das folgende Schritte aufweist:
- Der Riegel wird durch Wärme oder Strom von der Verriegelungsposition in die Freigabeposition bewegt,
- der Rasthaken wird vom Widerlager des ersten Halteteils gelöst,
- das zweite Halteteil wird vom ersten Halteteil abgezogen.

Das Lösen des Riegels ist hier erst möglich, wenn sich der Riegel in der Freigabeposition befindet. Ein Lösen mit geringen Abzugskräften ist somit nur in dieser Position des Riegels möglich, so dass ein versehentliches Lösen sicher ausgeschlossen ist. Vorteilhaft bei dieser Ausführungsform ist, dass die Baugruppe auch an schwer zugänglichen Positionen, in der die Baugruppe mit einem Werkzeug nur schwer zu erreichen ist, verwendet werden kann. Zum Lösen der Baugruppe ist es lediglich erforderlich, dass über Kabel oder Elektroden Strom auf den Riegel geleitet werden kann.

Der Riegel kann beispielsweise mit einem Werkzeug von der Verriegelungsposition in die Freigabeposition bewegt werden.

Weitere Vorteile und Merkmale vergeben sich aus der nachfolgenden Beschreibung in Verbindung mit den beigefügten Zeichnungen. In diesen zeigen:
- Figur 1 eine erfindungsgemäße Baugruppe,
- Figur 2 ein erstes Halteteil einer zweiten Ausführungsform einer erfindungsgemäßen Baugruppe,
- Figur 3 ein zweites Halteteil der Baugruppe aus Figur 1,
- Figur 4 einen Riegel der Baugruppe aus Figur 1,
- Figuren 5a bis 5e die Montage der Baugruppe aus Figur 1,
- Figuren 6a und 6b die Demontage der Baugruppe aus Figur 1.

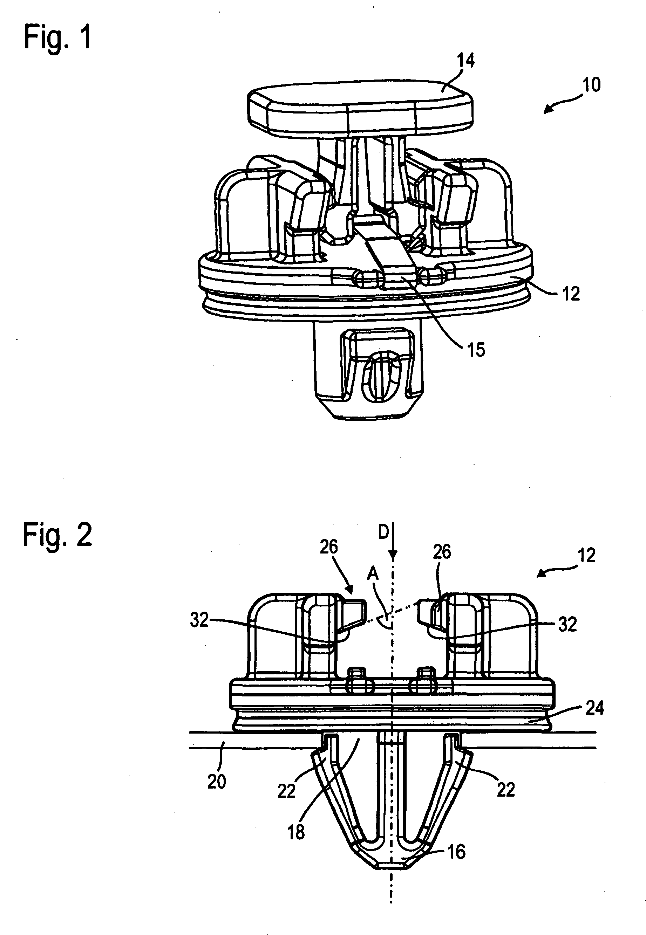

In Figur 1 ist eine Baugruppe 10 zur Befestigung eines Bauteils eines Kraftfahrzeugs dargestellt. Die Baugruppe 10 weist ein erstes Halteteil 12 sowie ein zweites Halteteil 14 auf, die hier miteinander verbunden sind. Das erste Halteteil 12 kann an einem Träger eines Kraftfahrzeugs, beispielsweise einem Karosserieteil, befestigt werden. Das zweite Halteteil 14 kann an einem Bauteil, beispielsweise einem Verkleidungsteil des Fahrzeugs, befestigt werden, das mittels der Baugruppe 10 am Träger des Kraftfahrzeugs befestigt wird. Grundsätzlich kann die Anordnung von ersten und zweiten Halteteil auch umgekehrt sein.

Das zweite Halteteil 14 ist mit zwei Rasthaken 36 versehen, die hinter Widerlagern 26 einrasten können, die am ersten Halteteil 12 vorgesehen sind. Am ersten Halteteil 12 ist ein Riegel 15 vorgesehen, der mit den beiden Rasthaken 36 zusammenwirken kann.

Wie in Figur 2, die eine zweite Ausführungsform des ersten Halteteils 12 zeigt, zu sehen ist, hat das erste Halteteil 12 ein Einschubelement 16, mit dem das erste Halteteil 12 in eine Öffnung 18 eines Trägers 20 eingeschoben und fixiert werden kann. Am Einschubelement 16 sind hier zwei Rastelemente 22 vorgesehen, die auf der Rückseite des Trägers 20 verrasten können und somit das erste Halteteil 12 am Träger 20 fixieren. Zur Abdichtung der Öffnung 18 ist zudem eine Dichtung 24 vorgesehen, die in montiertem Zustand des ersten Halteteils 12 am Träger 20 flächig auf der Vorderseite des Trägers 20 anliegt.

Auf der dem Einschubelement 16 gegenüberliegenden Seite weist das erste Halteteil 12 zwei einander radial gegenüberliegende Widerlager 26 auf, die eine Aussparung 28 definieren. In der hier dargestellten Ausführungsform ist nur das rechte Widerlager 26 zu sehen, das gegenüberliegende linke Widerlager 26 ist hier durch einen Anschlag 29 verdeckt. Die Aussparung 28 ist hier nur durch die Widerlager 26 begrenzt und senkrecht zu einer von den Widerlagern 26 definierten Ebene offen, das heißt, die Aussparung 28 ist seitlich offen.

Die Widerlager 26 weisen jeweils eine Widerlagerfläche 32 auf, die mit einem Winkel A zur Einschubrichtung D des zweiten Halteteils 14 geneigt sind.

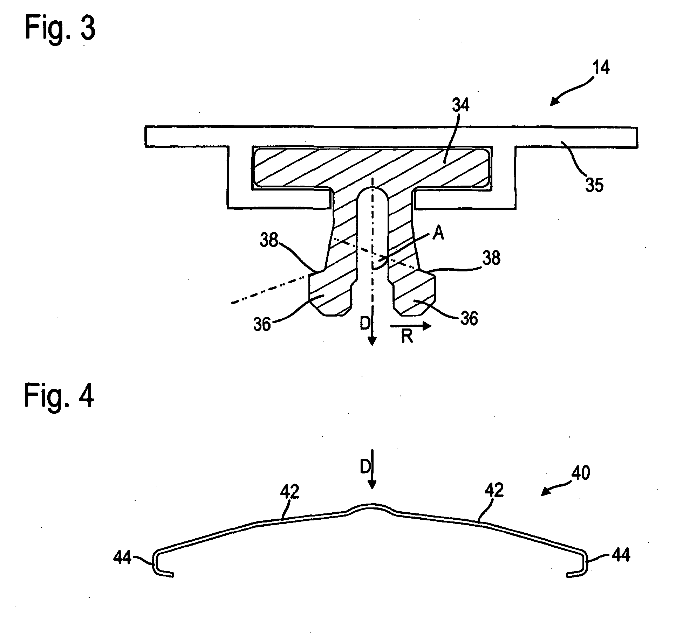

Das zweite Halteteil 14 weist einen Flansch 34 auf, an dem ein Verkleidungsteil 35 befestigt ist (Figur 3). Am Flansch 34 sind zwei in Einschubrichtung D sich erstreckende Rasthaken 36 vorgesehen, die elastisch verformbar ausgebildet sind, so dass diese in radialer Richtung R begrenzt beweglich sind. Es ist aber auch denkbar, dass die Rasthaken 36 beispielsweise mit einem Gelenk schwenkbar am zweiten Halteteil 14 gelagert sind. Die Form und die Anzahl der Rasthaken 36 kann zudem beliebig variiert und angepasst werden. Es sind auch Ausführungsformen mit nur einem Rasthaken 36 bzw. mit mehreren Rasthaken 36 denkbar. Die Rasthaken 36 weisen jeweils eine Rastfläche 38 auf, die zur Einschubrichtung D mit dem gleichen Winkel A geneigt sind wie die Widerlagerflächen 32 des ersten Halteteils 12.

In der zwischen den Widerlagern 26 vorgesehenen Aussparung 28 ist der in Figur 4 gezeigte Riegel 15 gelagert. Der Riegel 15 weist zwei Federabschnitte 42 auf, die hier eine Blattfeder bilden, sowie an jedem Ende einen Haken 44 zur Befestigung des Riegels 15 am ersten Halteteil 12 (siehe auch Figur 1). Der Riegel 15 ist hier aus einem elastisch verformbaren Material hergestellt, beispielsweise aus Federblech, und kann bei einer Belastung in Einschubrichtung D elastisch verformt werden.

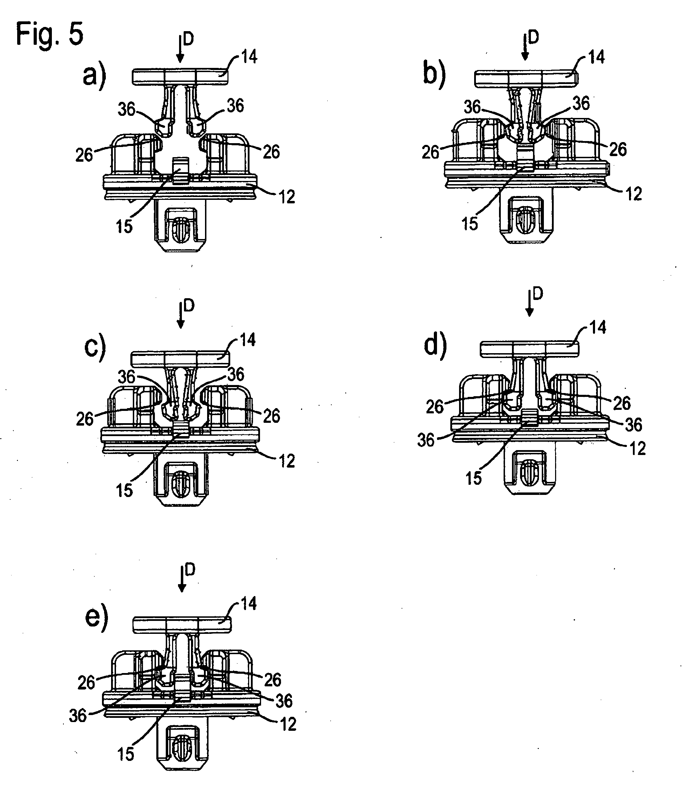

Die Funktion der Baugruppe 10 wird im Folgenden anhand der Figuren 5a bis 5e dargestellt, welche die Montage der Baugruppe 10 zeigen. Das erste Halteteil 12 und das zweite Halteteil 14 werden getrennt angeliefert und mit einem Träger 20 (erstes Halteteil 12) bzw. mit einem Verkleidungsteil 35 (zweites Halteteil 14) verbunden. Anschließend werden die Rasthaken 36 des zweiten Halteteils 14 in Einschubrichtung D in die Aussparung 28 zwischen den Widerlagern 26 des ersten Halteteils 12 eingeschoben (Figur 5a). Der Riegel 15 befindet sich in unverformtem Zustand, also in der Verriegelungsposition.

Wie in Figur 5b zu sehen ist, werden die Rasthaken 36 bei einem weiteren Einschieben in Einschubrichtung D in die Aussparung 28 zwischen den Widerlagern 26 von den Widerlagern 26 verdrängt und radial nach innen gedrückt.

Beim weiteren Einschieben drücken die Rasthaken 36 den Riegel 15 in Einschubrichtung D gegen das erste Halteteil 12 in eine Freigabeposition. In dieser Freigabeposition des Riegels 15 können die Rasthaken 36 so weit in das erste Halteteil 12 hineinbewegt werden, dass sie radial nach außen hinter die Widerlager 26 einschnappen können. Der Riegel 15 ist in dieser Position hin zur Verriegelungsposition vorgespannt und wird durch die Rasthaken 36 in der Freigabeposition gehalten.

In der in Figur 5d gezeigten Endmontageposition sind die Rasthaken 36 radial nach außen gefedert und liegen hinter den Widerlagern 26. Die Rastflächen 38 der Rasthaken 36 liegen also an den Widerlagerflächen 32 der Widerlager 26 an, so dass das zweite Halteteil 14 ist durch die Rasthaken 36 im Widerlager 26 des ersten Halteteils 12 gehalten ist. Da die Rastflächen 38 sowie die Widerlagerflächen 32 geneigt ausgebildet sind, kann das zweite Halteteil 14 in dieser Position wieder vom ersten Halteteil 12 entfernt werden, da bei höheren Abzugskräften entgegen der Einschubrichtung D die Rastflächen 38 entlang der Widerlagerflächen 32 gleiten können und somit die Rasthaken 36 radial nach innen aus den Widerlagern 26 gleiten können.

Sobald aber die Rasthaken 36 nach außen schnappen und in die Endmontageposition gelangen, geben sie den Riegel 15 frei, so dass dieser durch die Federelemente 42 zurück in die in Figur 5e gezeigte Verriegelungsposition gedrängt wird. Der Riegel 15 liegt in der Verriegelungsposition zwischen den Rasthaken 36 und liegt jeweils an diesen an, so dass eine radiale Bewegung der Rasthaken 36 ausgeschlossen ist. Die Rasthaken 36 können nicht aus den Widerlagern 26 gleiten, so dass die Rasthaken 36 an den Widerlagern 26 verriegelt sind. Das zweite Halteteil 14 ist dadurch sicher am ersten Halteteil 12 gelagert. Da der Riegel 15 durch die Federspannung der Blattfeder 42 automatisch von der Freigabeposition in die Verriegelungsposition gelangt, ist zur Sicherung der Baugruppe bzw. zur Sicherung des zweiten Halteteils 14 am ersten Halteteil 12 kein weiterer Arbeitsschritt notwendig.

Um eine Demontage zu ermöglichen, muss der Riegel 15 von der Verriegelungsposition, in der er die Rasthaken 36 arretiert, in die Freigabeposition bewegt werden, so dass die Rasthaken 36 wieder freigegeben werden und radial nach innen von den Widerlagern 26 gelöst werden können.

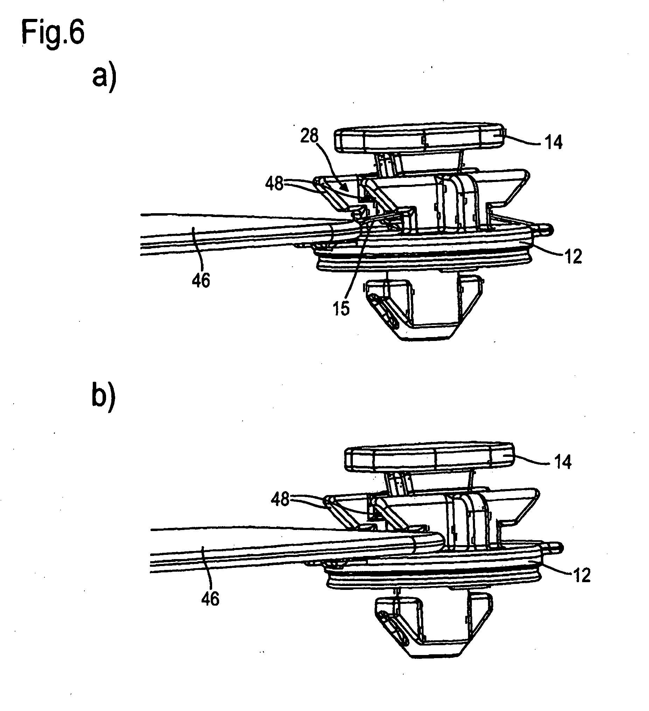

Dies kann beispielsweise wie in den Figuren 6a und 6b gezeigt mit Hilfe eines Werkzeugs 46 erfolgen. Das Werkzeug 46 ist hier flach ausgebildet, so dass dieses zwischen Träger 20 und Verkleidungsteil 35 eingeschoben werden kann. Das Werkzeug 46 wird radial in die Aussparung 28 zwischen den Widerlagern 26 eingeschoben und drängt dabei den Riegel 15 von der Verriegelungsposition in die Freigabeposition, also gegen das erste Halteteil 12. Die Rasthaken 36 sind dann nicht mehr verriegelt, so dass ein einfaches Lösen des zweiten Halteteils 14 vom ersten Halteteil 12 möglich ist (unter der Annahme, dass der Winkel A ein selbsttätiges Lösen ermöglicht).

Um das Einschieben des Werkzeugs 46 in die Aussparung 28 zu erleichtern, sind am ersten Halteteil 12 Führungsflächen 48 vorgesehen, die das Werkzeug 46 gegen den Riegel 15 führen und ein Abgleiten des Werkzeugs 46 verhindern.

Der Riegel 15 kann alternativ aus einem sogenannten Smart-Material hergestellt sein. Ein solches Material kann unter Wärme- oder Stromzufuhr seine Form ändern. Der Riegel 15 ist beispielsweise so ausgeformt, dass er in unverformtem Zustand am ersten Halteteil 12 die Verriegelungsposition einnimmt. Bei Wärme- oder Stromzufuhr verformt sich der Riegel 15 in die Freigabeposition, so dass die Rasthaken 36 hinter die Widerlager 26 gelangen können bzw. von diesen gelöst werden können. Ist der Riegel 15 stromlos, gelangt der Riegel automatisch in die Verriegelungsposition, so dass eine selbständige Verrieglung der Rasthaken 36 an den Widerlagern 26 erfolgt. Die Baugruppe 10 kann somit auch an schwer zugänglichen Stellen verwendet werden, an denen der Zugang mit einem Werkzeug nicht möglich ist. Zudem ist es denkbar, durch eine entsprechende Strom- oder Wärmezufuhr mehrere solcher Baugruppen gleichzeitig zu entriegeln, so dass beispielsweise eine schnelle Demontage von großen Verkleidungsteilen möglich ist.

Alternativ kann der Riegel 15 auch durch Induktion oder Magnetismus aus der Verriegelungsposition in die Freigabeposition gebracht werden.

In der in Figur 1 gezeigten Ausführungsform können die Rasthaken 36 aber auch radial bzw. seitlich aus der Aussparung 28 herausgeschoben werden, so dass eine Demontage des zweiten Halteteils 14 vom ersten Halteteil 12 ohne Verformung des Riegels 15 möglich ist. Ist der Winkel der Rastflächen zur Einschubrichtung kleiner als 90°, ist ein Herausziehen der Rasthaken 36 gegen die Einschubrichtung D nicht mehr möglich, so dass ein Lösen der Rasthaken 36 ausschließlich durch seitliches Herausschieben möglich ist.

Abweichend davon sind in der in Figur 2 dargestellten Ausführungsform an der Aussparung 28 Anschläge 29 vorgesehen, an denen das zweite Halteteil 14 in der Endmontageposition anliegt. Diese Anschläge 29 verhindern ein versehentliches Herausrutschen der Rasthaken 36 aus der Aussparung 28.

Abweichend von der hier dargestellten Ausführungsform kann der Riegel 15 auch ein anderes axial vorstehendes Federelement 42 aufweisen. Es sind aber auch andere Ausführungsformen ohne Federelement 42 denkbar. Der Riegel 15 kann auch auf jede andere Weise von der Freigabe- in die Verriegelungsposition gelangen.

Die Baugruppe 10 kann auch vormontiert angeliefert werden, das heiß, das erste Halteteil 12 und das zweite Halteteil 14 sind miteinander verbunden und müssen leidglich am Träger 20 bzw. am Verkleidungsteil 35 befestigt werden.

## Patentansprüche

1. Baugruppe (10) zur Befestigung eines Bauteils eines Fahrzeugs, insbesondere zur Befestigung eines Verkleidungsteils (35) an einem Träger (20), mit einem ersten Halteteil (12) und einem zweiten Halteteil (14), wobei das erste Halteteil (12) mindestens ein Widerlager (26) aufweist und das zweite Halteteil (14) mindestens einen Rasthaken (36), und wobei ein Riegel (15) vorgesehen ist, der zwischen einer Freigabeposition, in welcher der Rasthaken (36) hinter das Widerlager (26) gelangen bzw. von diesem gelöst werden kann, und einer Verriegelungsposition bewegbar ist, in welcher der Rasthaken (36) hinter dem Widerlager (26) verriegelt ist, wobei der Riegel (15) automatisch von der Freigabe- in die Verriegelungsposition gelangt, **dadurch gekennzeichnet, dass** der Riegel (15) ein vom ersten Halteteil (12) separates Bauteil ist.

2. Baugruppe (10) nach Anspruch 1, **dadurch gekennzeichnet, dass** der Riegel (15) zumindest teilweise aus einem Material gefertigt ist, das durch Wärme- oder Stromzufuhr zwischen Freigabeposition und Verriegelungsposition reversibel verformt werden kann.

3. Baugruppe nach Anspruch 1 oder 2, **dadurch gekennzeichnet, dass** der Rasthaken (36) zumindest teilweise elastisch verformbar ausgebildet ist.

4. Baugruppe nach Anspruch 3, **dadurch gekennzeichnet, dass** zumindest zwei Rasthaken (36) vorgesehen sind und der Riegel (15) in der Verriegelungsposition zwischen den Rasthaken (36) angeordnet ist.

5. Baugruppe nach einem der vorhergehenden Ansprüche, **dadurch gekennzeichnet, dass** der Rasthaken (36) in einer Zwischenmontageposition, in der der Rasthaken (36) teilweise in das Widerlager (26) des ersten Halteteils (12) eingeführt ist, den Riegel (15) in die Freigabeposition drängt.

6. Baugruppe nach einem der vorhergehenden Ansprüche, **dadurch gekennzeichnet, dass** der Riegel (15) zumindest teilweise aus einem elastisch verformbaren Material hergestellt ist.

7. Baugruppe nach einem der vorhergehenden Ansprüche, **dadurch gekennzeichnet, dass** der Riegel (15) ein am ersten Halteteil (12) vorgesehenes, gegen die Einschubrichtung (D) des zweiten Halteteils (14) axial vorstehendes Federelement (42) aufweist, das in der Freigabeposition hin zur Verriegelungsposition vorgespannt ist.

8. Befestigungselement nach Anspruch 6, **dadurch gekennzeichnet, dass** das Federelement (42) eine Blattfeder ist,

9. Baugruppe nach einem der vorhergehenden Ansprüche, **dadurch gekennzeichnet, dass** das Widerlager (26) des ersten Halteteils (12) eine Aussparung (28) definiert, die zumindest eine radiale Öffnung aufweist.

10. Baugruppe nach Anspruch 9, **dadurch gekennzeichnet, dass** an der Aussparung (28) Anschläge vorgesehen sind, an denen das zweite Halteteil (14) in einer Endmontageposition anliegt.

11. Baugruppe nach einem der vorhergehenden Ansprüche, **dadurch gekennzeichnet, dass** die am Widerlager (26) anliegende Rastfläche (38) des Rasthakens (36) zur Einschubrichtung (D) einen Winkel von 20° bis 120° aufweist.

12. Verfahren zur Montage einer Baugruppe (10) nach einem der vorhergehenden Ansprüche mit folgenden Schritten:
- durch Einschieben des Rasthakens (36) in das Widerlager (26) des ersten Halteteils (12) bis in eine Zwischenmontageposition wird der Riegel (15) in eine Freigabeposition bewegt,
- der Rasthaken (36) wird weiter bis in eine Endmontageposition eingeschoben, in der der Rasthaken (36) am Widerlager (26) verrastet,
- der Riegel (15) bewegt sich selbstständig in die Verriegelungsposition.

13. Verfahren zur Demontage der Baugruppe (10) nach Anspruch 2 mit folgenden Schritten:
- der Riegel (15) wird durch Wärme oder Strom von der Verriegelungsposition in die Freigabeposition bewegt,
- der Rasthaken (36) wird vom Widerlager (26) des ersten Halteteils (12) gelöst,
- das zweite Halteteil (14) wird vom ersten Halteteil (12) abgezogen.

## Claims

1. An assembly (10) for attachment of a component of a vehicle, in particular for attachment of a lining part (35) to a carrier (20), comprising a first holding part (12) and a second holding part (14), the first holding part (12) having at least one abutment (26) and the second holding part (14) having at least one detent hook (36), and a locking bar (15) being provided which can be moved between a release position, in which the detent hook (36) can move behind, and be released from, the abutment (26), and a locking position, in which the detent hook (36) is locked behind the abutment (26), the locking bar (15) automatically moving from the release position to the locking position, **characterized in that** the locking bar (15) is a component that is separate from the first holding part (12).

2. The assembly (10) according to claim 1, **characterized in that** the locking bar (15) is produced at least partly from a material which can be reversibly deformed between the release position and the locking position by a supply of heat or power.

3. The assembly according to claim 1 or 2, **characterized in that** the detent hook (36) is made to be at least partly elastically deformable.

4. The assembly according to claim 3, **characterized in that** at least two detent hooks (36) are provided, and in the locking position the locking bar (15) is arranged between the detent hooks (36).

5. The assembly according to any of the preceding claims, **characterized in that** in an intermediate mounting position, in which the detent hook (36) is partly inserted in the abutment (26) of the first holding part (12), the detent hook (36) urges the locking bar (15) into the release position.

6. The assembly according to any of the preceding claims, **characterized in that** the locking bar (15) is made at least partly from an elastically deformable material.

7. The assembly according to any of the preceding claims, **characterized in that** the locking bar (15) includes a spring member (42) provided on the first holding part (12) and axially protruding against the direction of insertion (D) of the second holding part (14) and which in the release position is pretensioned toward the locking position.

8. The fastening element according to claim 6, **characterized in that** the spring member (42) is a leaf spring.

9. The assembly according to any of the preceding claims, **characterized in that** the abutment (26) of the first holding part (12) defines a recess (28) having at least one radial opening.

10. The assembly according to claim 9, **characterized in that** the recess (28) has stops provided thereon against which the second holding part (14) rests in a final mounting position.

11. The assembly according to any of the preceding claims, **characterized in that** the detent surface (38) of the detent hook (36) resting against the abutment (26) has an angle of from 20° to 120° with respect to the direction of insertion (D).

12. A method of mounting an assembly (10) according to any of the preceding claims, comprising the following steps:
- the locking bar (15) is moved to a release position by inserting the detent hook (36) into the abutment (26) of the first holding part (12) up to an intermediate mounting position,
- the detent hook (36) is inserted further up to a final mounting position, in which the detent hook (36) locks into place at the abutment (26),
- the locking bar (15) automatically moves to the locking position.

13. A method of dismounting the assembly (10) according to claim 2, comprising the following steps:
- the locking bar (15) is moved from the locking position to the release position by heat or power,
- the detent hook (36) is released from the abutment (26) of the first holding part (12),
- the second holding part (14) is pulled off the first holding part (12).

## Revendications

1. Ensemble (10) pour la fixation d'un composant d'un véhicule, en particulier pour la fixation d'une pièce de revêtement (35) sur un support (20), présentant une première pièce de retenue (12) et une deuxième pièce de retenue (14), la première pièce de retenue (12) présentant au moins une butée (26) et la deuxième pièce de retenue (14) au moins un crochet d'enclenchement (36), et un verrou (15) étant prévu, lequel est déplaçable entre une position de déblocage dans laquelle le crochet d'enclenchement (36) peut parvenir derrière la butée (26) ou être détaché de celle-ci, et une position de verrouillage dans laquelle le crochet d'enclenchement (36) est verrouillé derrière la butée (26), le verrou (15) parvenant automatiquement de la position de déblocage vers la position de verrouillage, **caractérisé en ce que** le verrou (15) est un composant séparé de la première pièce de retenue (12).

2. Ensemble (10) selon la revendication 1, **caractérisé en ce que** le verrou (15) est au moins en partie réalisé en une matière qui est apte à être déformée de manière réversible entre la position de déblocage et la position de verrouillage par un apport de chaleur ou une alimentation en courant.

3. Ensemble selon la revendication 1 ou 2, **caractérisé en ce que** le crochet d'enclenchement (36) est réalisé de manière à être au moins en partie élastiquement déformable.

4. Ensemble selon la revendication 3, **caractérisé en ce qu'**il est prévu au moins deux crochets d'enclenchement (36) et **en ce que** dans la position de verrouillage, le verrou (15) est agencé entre les crochets d'enclenchement (36).

5. Ensemble selon l'une des revendications précédentes, **caractérisé en ce que** dans une position de montage intermédiaire dans laquelle le crochet d'enclenchement (36) est en partie inséré dans la butée (26) de la première pièce de retenue (12), le crochet d'enclenchement (36) pousse le verrou (15) dans la position de déblocage.

6. Ensemble selon l'une des revendications précédentes, **caractérisé en ce que** le verrou (15) est au moins en partie réalisé en une matière élastiquement déformable.

7. Ensemble selon l'une des revendications précédentes, **caractérisé en ce que** le verrou (15) présente un élément ressort (42) qui est prévu sur la première pièce de retenue (12), qui fait axialement saillie à l'encontre du sens d'insertion (D) de la deuxième pièce de retenue (14) et qui est précontraint vers la position de verrouillage dans la position de déblocage.

8. Elément de fixation selon la revendication 6, **caractérisé en ce que** l'élément ressort (42) est un ressort à lames.

9. Ensemble selon l'une des revendications précédentes, **caractérisé en ce que** la butée (26) de la première pièce de retenue (12) définit un évidement (28) qui présente au moins un orifice radial.

10. Ensemble selon la revendication 9, **caractérisé en ce que** des arrêts contre lesquels la deuxième pièce de retenue (14) repose dans une position de montage finale sont prévus sur l'évidement (28).

11. Ensemble selon l'une des revendications précédentes, **caractérisé en ce que** la surface d'enclenchement (38) du crochet d'enclenchement (36) qui est en appui contre la butée (26) présente un angle de 20° à 120° par rapport au sens d'insertion (D).

12. Procédé de montage d'un ensemble (10) selon l'une des revendications précédentes, comprenant les étapes suivantes :
- le verrou (15) est déplacé dans une position de déblocage par l'insertion du crochet d'enclenchement (36) dans la butée (26) de la première pièce de retenue (12) jusque dans une position de montage intermédiaire,
- le crochet d'enclenchement (36) est inséré plus loin jusque dans une position de montage finale dans laquelle le crochet d'enclenchement (36) s'enclenche sur la butée (26),
- le verrou (15) se déplace automatiquement vers la position de verrouillage.

13. Procédé de démontage de l'ensemble (10) selon la revendication 2, comprenant les étapes suivantes :
- le verrou (15) est déplacé de la position de verrouillage vers la position de déblocage par de la chaleur ou par du courant,
- le crochet d'enclenchement (36) est détaché de la butée (26) de la première pièce de retenue (12),
- la deuxième pièce de retenue (14) est retirée de la première pièce de retenue (12).
